(19) Europäisches Patentamt
European Patent Office
Office européen des brevets

(11) **EP 4 699 724 A1**

(12) **EUROPEAN PATENT APPLICATION**

(43) Date of publication:
25.02.2026 Bulletin 2026/09

(21) Application number: 25188064.7

(22) Date of filing: 08.07.2025

(51) International Patent Classification (IPC):
*B23C 5/10* *(2006.01)*

(52) Cooperative Patent Classification (CPC):
**B23C 5/10;** B23C 2200/289; B23C 2210/54

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 23.08.2024 JP 2024143454

(71) Applicant: UNION TOOL CO.
Tokyo (JP)

(72) Inventor: KOSHIO, Junichi
Shinagawa, Tokyo (JP)

(74) Representative: Hoffmann Eitle
Patent- und Rechtsanwälte PartmbB
Arabellastraße 30
81925 München (DE)

(54) **END MILL**

(57) It is an object of the present invention to provide an end mill with which it is possible, even in cases where overcutting occurs due to built-up edges, entrainment of scattered swarf, or other phenomena, to remove marring appearing due to the overcutting and finish a machined surface to an excellent glossy surface. The present invention provides an end mill having linear end cutting edges (1) on a tool distal end, wherein: a pressing sliding-contact surface (2) is continuous with the side of each end cutting edge (1) oriented rearward in the direction of tool rotation, and, in a pressed state, makes sliding contact with a cut surface cut by the cutting edges (1); the pressing sliding-contact surfaces (2) are configured as inclined flat surfaces that are inclined upward at a prescribed inclination angle ($\alpha$) from the end-cutting-edge (1) side toward the side oriented rearward in the direction of tool rotation in a state in which the tool distal end is oriented upward; and the inclination angle ($\alpha$) is set greater than 0° but not greater than 4° with respect to a surface (S) orthogonal to a tool rotation axis (C).

EP 4 699 724 A1

**Description**

## TECHNICAL FIELD

The present invention relates to an end mill having linear end cutting edges on the distal end of the tool, such as a radius end mill or a square end mill.

## BACKGROUND ART

Such end mills are used in various types of machining, such as rough processing, intermediate finishing, and final finishing, because flat surfaces can be machined using the end cutting edges. However, with prior-art end mills, there have been instances where marring (cutter marking) appears on cut surfaces even when such end mills are used for final finishing machining.

When investigating the causes of the aforementioned issue, the applicants considered overcutting due to built-up edges as a possibility, and accordingly proposed the end mill shown in Patent Document 1 (referred to below as the "prior-art example") in order to suppress formation of built-up edges. The term "built-up edges" refers to a phenomenon where chips (swarf) fuse to the tips of cutting edges during cutting and assume the form of new tips of cutting edges, acting as cutting teeth.

In this prior-art example, a plurality of swarf discharge grooves running from the distal end to the proximal end of a tool are provided to the outer circumference of the distal-end part of the body of the tool. An end cutting edge is provided integrally with the tool body at individual ridge parts constituting an intersection between rake surfaces of the swarf discharge grooves and distal-end flank surfaces of the tool body. A protruding rim that protrudes toward the distal-end side in the tool axis direction is formed on at least one end cutting edge. The protruding rim is formed by causing a plurality of linear rims that are substantially linear to be continuous. Setting the end cutting edge having the protruding rim to a prescribed rake angle suppresses formation of built-up edges.

[Prior-art Documents]

[Patent Documents]

[Patent Document 1] Japanese Laid-open Patent Application No. 2016-16468

## DISCLOSURE OF THE INVENTION

## PROBLEMS THE PRESENT INVENTION IS INTENDED TO SOLVE

However, although formation of built-up edges is suppressed in the prior-art example as described above, formation of built-up edges cannot be completely suppressed, and with certain types of workpiece materials (e.g., soft workpiece materials having low hardness), built-up edges may be produced and marring may appear.

Additionally, in the prior-art example, no effect is exhibited on marring that does not originate from built-up edges, such as marring originating from entrainment of scattered swarf or other phenomena.

Therefore, even if the prior-art example is used, marring may remain on a machined surface and an excellent glossy surface may be impossible to obtain. In such cases, a problem is presented in that polishing must be carried out in a subsequent step, and such polishing requires processing time.

In view of the foregoing circumstances, the applicants investigated new approaches and considered that, rather than suppressing formation of built-up edges, removing any marring appearing due to built-up edges that happen to form could enable an excellent glossy surface to be obtained. After having performed thorough investigations, the applicants discovered the present invention.

Specifically, it is an object of the present invention to provide an end mill with which it is possible, even in cases where overcutting occurs due to built-up edges, entrainment of scattered swarf, or other phenomena, to remove marring appearing due to the overcutting and finish a machined surface to an excellent glossy surface.

## MEANS FOR SOLVING THE AFOREMENTIONED PROBLEMS

The main points of the present invention are described below with reference to the accompanying drawings.

A first aspect of the present invention pertains to an end mill having linear end cutting edges 1 on a tool distal end, the end mill being characterized in that: a pressing sliding-contact surface 2 is continuous with the side of each end cutting edge 1 oriented rearward in the direction of tool rotation, and, in a pressed state, makes sliding contact with a cut surface cut by the cutting edges 1; the pressing sliding-contact surfaces 2 are configured as inclined flat surfaces that are inclined upward at a prescribed inclination angle $\alpha$ from the end-cutting-edge 1 side toward the side oriented rearward in the direction of tool rotation in a state in which the tool distal end is oriented upward; and the inclination angle $\alpha$ is set greater than 0° but not greater than 4° with respect to a surface S orthogonal to a tool rotation axis C.

A second aspect of the present invention pertains to the end mill according to the first aspect, wherein the end mill is characterized in that: a flank surface 3 is continuous with the side of the pressing sliding-contact surfaces 2 oriented rearward in the direction of tool rotation; and the pressing sliding-contact surfaces 2 and ridges 4 formed at boundaries between the pressing sliding-contact surfaces 2 and the flank surfaces 3 are configured to make sliding contact with the cut surface in a state of pressing against the cut surface.

A third aspect of the present invention pertains to the end mill according to the second aspect, wherein the end mill is characterized in that: the end mill has protruding region parts 5, each of which includes one of the pressing sliding-contact surfaces 2, one of the flank surfaces 3, and one of the ridges 4, the protruding region parts 5 projecting in the direction of the tool distal end away from the end cutting edges 1; and the projection amount A of the protruding region parts 5 with respect to the end cutting edges 1 is configured to be greater than 0 mm but not greater than 0.004 mm.

A fourth aspect of the present invention pertains to the end mill according to any one of the first to third aspects, wherein the end mill is characterized in that the pressing sliding-contact surfaces 2 have a length of at least 1% of the tool outside diameter and are provided from an outer-circumferential-side base point of each end cutting edge 1 toward the tool-rotation-axis C side.

A fifth aspect of the present invention pertains to the end mill according to any one of the first to fourth aspects, wherein the end mill is characterized in that the dish angle $\beta$ of the end cutting edges 1 is 0-1°.

A sixth aspect of the present invention pertains to the end mill according to any one of the first to fifth aspects, wherein the end mill is characterized in that the pressing sliding-contact surfaces 2 are formed as bands and are provided from an outer-circumferential-side base point of each end cutting edge 1 to the vicinity of the tool rotation axis C.

A seventh aspect of the present invention pertains to the end mill according to any one of the first to sixth aspects, wherein the end mill is characterized by being configured as a radius end mill in which a radiused corner cutting edge 6 is formed so as to be continuous with the outer-circumferential side of each end cutting edge 1, and, furthermore, an outer-circumferential cutting edge 7 is formed so as to be continuous with each radiused corner cutting edge 6.

## EFFECT OF THE INVENTION

Due to being configured as described above, the present invention makes it possible, even in cases where overcutting occurs due to built-up edges, entrainment of scattered swarf, or other phenomena, to remove marring appearing due to the overcutting and finish a machined surface to an excellent glossy surface.

Accordingly, there is provided a useful end mill with which it is possible to eliminate any polishing step that follows cutting machining or reduce the processing time for existing polishing steps, and with which labor is reduced and productivity increases.

## BRIEF DESCRIPTION OF THE DRAWINGS

FIG. 1 is a plan view (tool-distal-end view) of the present example;
FIG. 2 is a front view showing a cutting edge part in the present example;
FIG. 3 is a side view showing the cutting edge part in the present example;
FIG. 4 is a conceptual enlarged side cross-sectional view showing the inclination angle ($\alpha$) of a pressing sliding-contact surface on a protruding region part in the present example and the projection amount (A) of the protruding region part;
FIG. 5 is an illustrative view showing the dish angle of end cutting edges in the present example;
FIG. 6 is an illustrative view showing another example of the present example;
FIG. 7(a) is an illustrative view showing the action and effect of the present invention, and FIG. 7(b) is a photograph showing the surface state of a machined surface;
FIG. 8(a) is an illustrative view showing a mechanism via which marring appears due to a built-up edge in a prior-art end mill, and FIG. 8(b) is a photograph showing the surface state of a machined surface;
FIG. 9 is a set of photographs showing results from evaluating gloss (workpiece material hardness: 30 HRC) in experiment 2;
FIG. 10 is a set of photographs showing results from evaluating gloss (workpiece material hardness: 40 HRC) in experiment 2;
FIG. 11 is a set of photographs showing results from evaluating gloss (workpiece material hardness: 50 HRC) in experiment 2;

FIG. 12 is a set of photographs showing results from evaluating gloss (workpiece material hardness: 53 HRC) in experiment 2;

FIG. 13 is a set of photographs showing results from confirming a surface state using a laser microscope in experiment 3; and

FIG. 14 is a set of photographs showing results from evaluating gloss in experiment 4.

## BEST MODE FOR CARRYING OUT THE INVENTION

A preferred embodiment of the present invention is briefly described below with reference to the drawings while indicating the effects of the present invention.

In the present invention, a pressing sliding-contact surface 2 that is continuous with the side of each end cutting edge 1 oriented rearward in the direction of tool rotation is configured as an inclined flat surface that is inclined by an inclination angle $\alpha$ with respect to a surface S orthogonal to a tool rotation axis C; i.e., an inclined flat surface that is inclined upward at the inclination angle $\alpha$ from the end-cutting-edge 1 side toward the side oriented rearward in the direction of tool rotation in a state in which the tool distal end is oriented upward, and is configured to make sliding contact with a cut surface cut by the end cutting edges 1 in a state of pressing against the cut surface. Therefore, the pressing sliding-contact surfaces 2 move while plastically deforming the cut surface, and the cut surface is thereby scraped smooth.

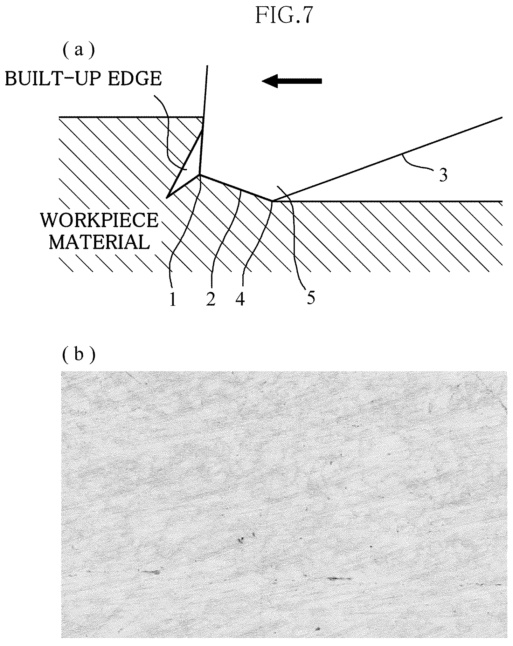

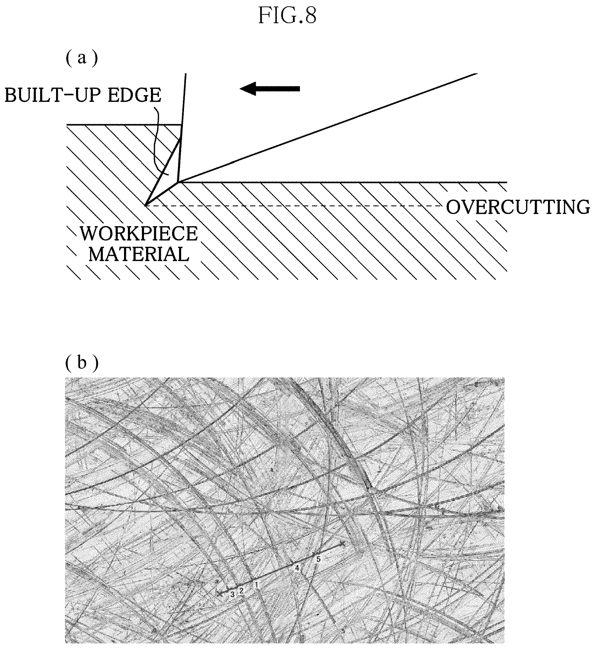

In prior-art end mills, when built-up edges are produced, overcutting occurs due to the built-up edges, and marring remains in the form of scratches deeper than a cut surface cut by end cutting edges, as shown in FIG. 8. These scratches make it impossible to achieve glossiness in a machined surface. However, in the present invention, the pressing sliding-contact surfaces 2 scrape the cut surface cut by the end cutting edges 1 smooth while plastically deforming the cut surface, as shown in FIG. 7. As a result, a greater burnishing effect is achieved, a polishing action is exhibited that is sufficient even for deep scratches formed by overcutting occurring due to built-up edges, entrainment of swarf, or other phenomena, marring is removed, and the machined surface (cut surface) can be finished to an excellent glossy surface.

Moreover, in the present invention, because the inclination angle $\alpha$ of the pressing sliding-contact surfaces 2 is set greater than 0° but not greater than 4°, cutting resistance produced by the pressing sliding-contact surfaces 2 will not be excessively high, the tool orientation will be stable during cutting, and smooth cutting machining can be achieved even while the effect described above is exhibited.

Furthermore, in the present invention, in comparison with the cutting edge material angle of end cutting edges (i.e., angle formed by a rake surface and a flank surface) in a typical prior-art end mill that does not have pressing sliding-contact surfaces 2, the angle corresponding to the cutting edge material angle of the end cutting edges 1 (i.e., angle formed by a rake surface 10 and a pressing sliding-contact surface 2; referred to below as the "cutting edge material angle of the end cutting edges 1") increases due to the pressing sliding-contact surfaces 2, and the volume of the end-cutting-edge distal end increases; therefore, loss of the end cutting edges 1 is prevented to the greatest extent possible.

### [Examples]

Specific examples of the present invention are described below with reference to the drawings.

The present example illustrates a case where the end mill according to the present invention is applied as a radius end mill having cutting teeth 8 each configured from an end cutting edge 1, a radiused corner cutting edge 6 that is continuous with the outer-circumferential side of the end cutting edge 1, and an outer-circumferential cutting edge 7 that is continuous with the radiused corner cutting edge 6.

Specifically, the present example comprises a pressing sliding-contact surface 2 that is continuous with the side of each end cutting edge 1 oriented rearward in the direction of tool rotation, and, in a pressed state, makes sliding contact with a cut surface cut by the cutting edges 1 (referred to below as "the surface cut by the end cutting edges 1"). The present example is configured such that scratches (marring) produced on the surface cut by the end cutting edges 1 are removed due to a burnishing effect caused by the pressing sliding-contact action of the pressing sliding-contact surfaces 2, and a glossy machined surface is obtained.

Constituent parts according to the present example shall be described below.

The present example has a configuration in which a cutting edge part 9 is provided to the distal end of a shank part (not shown) with a neck part (not shown) interposed therebetween.

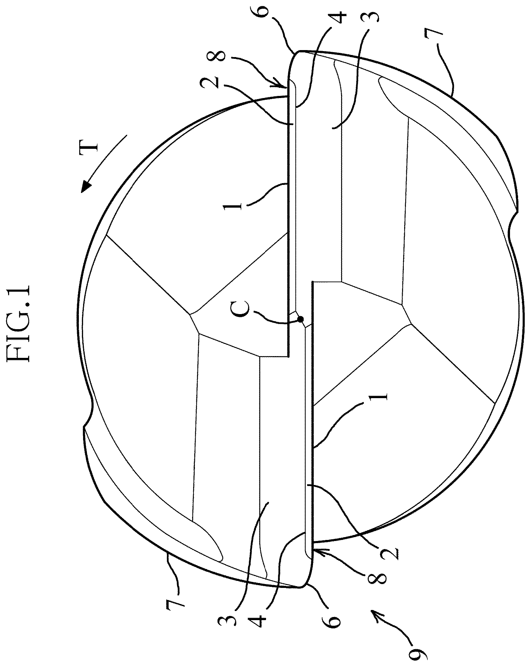

The cutting edge part 9 is configured from two cutting teeth 8, and each of the cutting teeth 8 is configured from an end cutting edge 1 that is provided in a linear form to the tool distal end, a radiused corner cutting edge 6 that is continuous with the outer-circumferential side of the end cutting edge 1, and an outer-circumferential cutting edge 7 that is continuous with the radiused corner cutting edge 6, as shown in FIG. 1. Specifically, the present example is a two-cutting-edge radius end mill in which the cutting edge part 9 is configured from two cutting teeth 8. The cutting edge part 9 is not limited to having the configuration described above; for example, the cutting edge part 9 may be configured from four or six cutting edges. It is also permissible for the end mill to not have the radiused corner edges 6 and to be configured as a square end mill in which the cutting edge part 9 is configured from only the end cutting edges 1 and the outer-circumferential cutting edges 7.

In the present example, end points on the tool-circumferential side of the end cutting edges 1 are referred to as outer-circumferential-side base points of the end cutting edges 1. For example, in a radius end mill, boundary positions between the end cutting edges 1 and the radiused corner edges 6 are the outer-circumferential-side base points of the end cutting edges 1. Alternatively, in a square end mill, boundary positions between the end cutting edges 1 and the outer-circumferential cutting edges 7 are the outer-circumferential-side base points of the end cutting edges 1.

Each cutting tooth 8 is formed to be "ahead of center," as shown in FIG. 1. In the present example, "ahead of center" means each end cutting edge 1 or each extension of the end cutting edges 1 is provided further forward in the direction of tool rotation about a tool rotation axis C without passing through the tool rotation axis C. The end cutting edges 1 are not limited to having the configuration described above; for example, each cutting tooth 8 may be formed to be "behind center," in which each end cutting edge 1 or each extension of the end cutting edges 1 is provided further rearward in the direction of tool rotation about the tool rotation axis C without passing through the tool rotation axis C, or may be formed such that each end cutting edge 1 or each extension of the end cutting edges 1 passes through the tool rotation axis C. In the drawings, arrows marked by reference symbol T indicate the tool rotation direction.

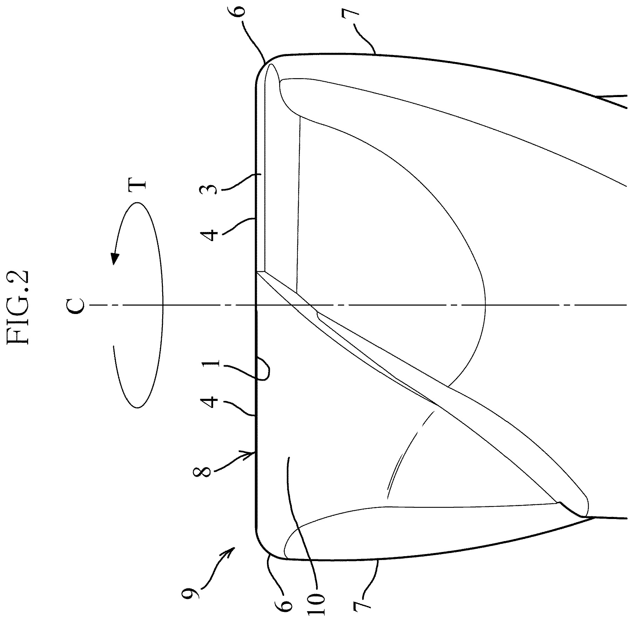

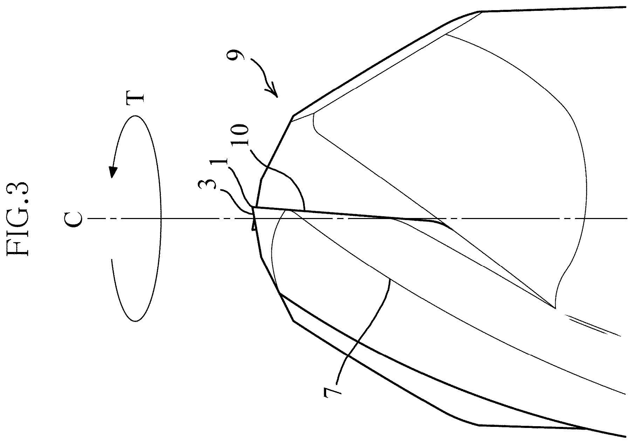

Each outer-circumferential cutting edge 7 is configured as a twisting cutting edge formed in a helical shape around the tool rotation axis C, as shown in FIGS. 2 and 3. The outer-circumferential cutting edges 7 are not limited to having the configuration described above; for example, the outer-circumferential cutting edges 7 may be linear cutting edges (straight cutting edges or tapered cutting edges).

As shown in FIG. 2, each radiused corner cutting edge 6 is formed in the shape of substantially one-fourth of a circular arc (rounded form) protruding toward the distal-end outer-circumferential direction of the cutting edge part 9 (cutting teeth 8), with one end of each radiused corner cutting edge 6 being continuous with the outer-circumferential-side base point of one end cutting edge 1 and the other end of each radiused corner cutting edge 6 being continuous with the distal-end part of one outer-circumferential cutting edge 7.

Each end cutting edge 1 is provided in a linear form from a portion continuous with one radiused corner cutting edge 6 to the vicinity of the tool rotation axis C, the end cutting edges 1 being parallel to each other and being provided at positions in a point-symmetrical relationship centered on the tool rotation axis C, as shown in FIGS. 1 and 2.

The pressing sliding-contact surfaces 2 are continuous with the side of each end cutting edge 1 oriented rearward in the direction of tool rotation, and, in a pressed state, makes sliding contact with the surface cut by the cutting edges.

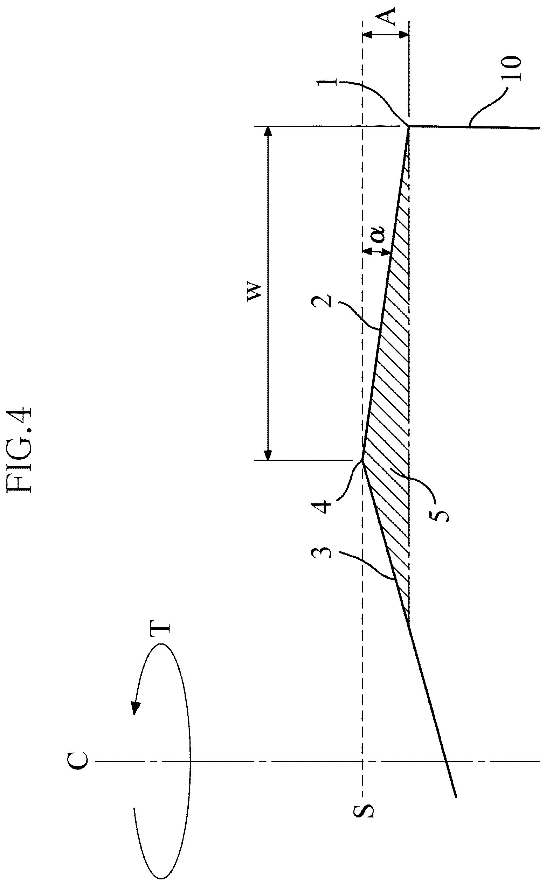

Specifically, the pressing sliding-contact surfaces 2 are configured as inclined flat surfaces that are inclined upward at a prescribed inclination angle $\alpha$ from the end-cutting-edge 1 side toward the side oriented rearward in the direction of tool rotation (flank-surface 3 side) in a state in which the tool distal end is oriented upward, as shown in FIG. 4.

More specifically, the pressing sliding-contact surfaces 2 are formed as bands of substantially equal width, and as shown in FIG. 4, the pressing sliding-contact surfaces 2 are configured as inclined flat surfaces having the inclination angle $\alpha$ with respect to a surface S orthogonal to the tool rotation axis C and are provided extending across substantially the entire length of the end cutting edges 1. In cases where the inclination angle $\alpha$ of the pressing sliding-contact surfaces 2 is 0°, i.e., cases where the pressing sliding-contact surfaces 2 are parallel to the surface S orthogonal to the tool rotation axis C, no pressing action will occur and it will be difficult to obtain the polishing effect. Additionally, in cases where the inclination angle $\alpha$ is greater than 4°, there will be concern that shear could occur or the tool could be damaged due to an increase in the cutting resistance and a loss of stability in the tool orientation. Therefore, the inclination angle $\alpha$ is set greater than 0° but not greater than 4°, preferably 0.5-4°, and more preferably 1-3°.

The present example is configured such that the pressing sliding-contact surfaces 2 are provided across the entirety of the end cutting edges 1, but the pressing sliding-contact surfaces 2 are not limited to being of the length indicated in the present example. The pressing sliding-contact surfaces 2 may have a length of at least 1% of the tool outside diameter and may be configured to be provided from the outer-circumferential-side base points of the end cutting edges 1, i.e., the boundaries between the end cutting edges 1 and the radiused corner edges 6, toward the tool-rotation-axis C side.

The pressing sliding-contact surfaces 2 are not limited to being of an elongated form. The pressing sliding-contact surfaces 2 may have a substantially triangular shape as seen from the tool distal end such that the surface width thereof gradually decreases toward the tool-rotation-axis C side.

The pressing sliding-contact surfaces 2 are continuous with flank surfaces 3 positioned on the sides of the end cutting edges 1 oriented rearward in the direction of tool rotation, as shown in FIGS. 1 and 4, and the pressing sliding-contact surfaces 2 and ridges 4 formed at boundaries between the pressing sliding-contact surfaces 2 and the flank surfaces 3 are configured to make sliding contact with the cut surface in a state of pressing against the cut surface.

Specifically, end cutting edges of a typical prior-art radius end mill (referred to below as a "prior-art article") are formed from a rake surface and a flank surface, but in the present invention, because the pressing sliding-contact surfaces 2 are provided between the end cutting edges 1 and the flank surfaces 3, the end cutting edges 1 are formed by rake surfaces 10 and the pressing sliding-contact surfaces 2 (the ridges formed at boundaries between the rake surfaces 10 and the pressing sliding-contact surfaces 2 constitute the end cutting edges 1).

The present example is configured to have protruding region parts 5, each of which includes one of the pressing sliding-contact surfaces 2, one of the flank surfaces 3, and one of the ridges 4, the protruding region parts 5 projecting further in the direction of the tool distal end than the end cutting edges 1, as shown in FIG. 4. The protruding region parts 5 are configured such that the projection amount A with respect to the end cutting edges 1 is greater than 0 mm but not greater than 0.004 mm, and is preferably 0.001-0.003 mm. The projection amount A of the protruding region parts 5 in the present example is the amount by which regions contributing to cutting machining performed by the end cutting edges 1 project toward the outermost-circumferential side (toward a boundary portion with the radiused corner cutting edge 6). The projection amount A can be derived through direct measurement using a microscope or a profiler. In cases where the projection amount A is extremely small and direct measurement such as that described above is difficult, the projection amount A can be derived according to formula (1) (see FIG. 4).

$$\text{Formula (1): (Projection amount A)} = w \times \tan\alpha$$

In the formula, w represents the width of the pressing sliding-contact surfaces 2, and $\alpha$ represents the inclination angle of the pressing sliding-contact surfaces 2.

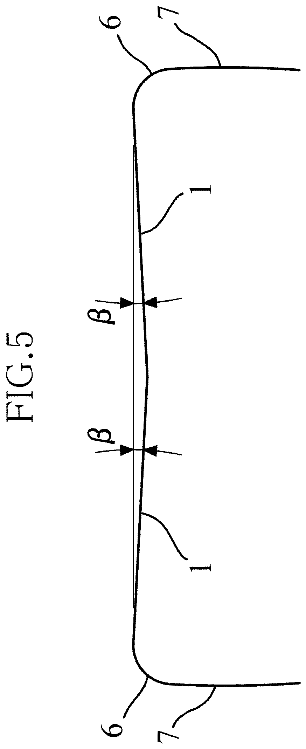

In the present example, the dish angle $\beta$ of the end cutting edges 1 (see FIG. 5) is set to a smaller angle than in the prior-art article (around roughly 3°) so that a region where the pressing sliding-contact surface 2 described above contacts the workpiece material increases in size.

Specifically, in the present example, the dish angle $\beta$ of the end cutting edges 1 is set to 0-1°, preferably 0-0.5°, and more preferably 0-0.2° (0° is ideal; if the dish angle $\beta$ is less than 0°, then the furthest distal end of the tool will be near the tool rotation axis C, the pressing sliding-contact action of the pressing sliding-contact surfaces 2 (protruding region parts 5) will not be exhibited, and the machined surface will be roughened and non-glossy).

The end cutting edges 1 may be configured so that the dish angle $\beta$ changes in the length direction (radial direction) of the end cutting edges 1, instead of being set to a fixed dish angle $\beta$ as described above.

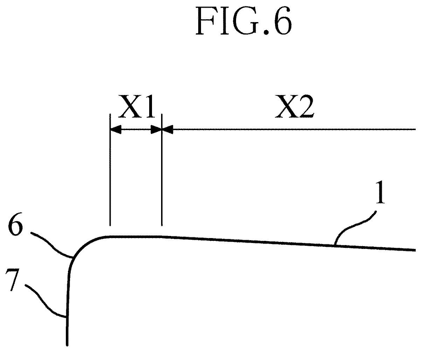

Specifically, for example, a configuration may be adopted in which the dish angle $\beta$ is 0-0.5° in a prescribed region X1 on the outer-circumferential side of the end cutting edges 1, and in which the dish angle $\beta$ is equivalent to that in a prior-art radius end mill (i.e., about 3°) in a region X2 further inward (on the tool-rotation-axis C side), as shown in FIG. 6.

Due to being configured as described above, the present example is such that the pressing sliding-contact surfaces 2 scrape the cut surface cut by the end cutting edges 1 smooth while plastically deforming the cut surface. As a result, a greater burnishing effect is achieved, a polishing action is exhibited that is sufficient even for deep scratches formed by overcutting occurring due to built-up edges, entrainment of scattered swarf, or other phenomena, marring is removed, and the machined surface (cut surface) can be finished to an excellent glossy surface.

Therefore, there is provided a useful end mill with which it is possible to eliminate a polishing step that follows cutting machining or to reduce the processing time for existing polishing steps, and with which labor is reduced and productivity increases.

Additionally, in the present example, the pressing sliding-contact surfaces 2 are provided along the end cutting edges 1, whereby the cutting edge material angle of the end cutting edges 1 increases, and the volume of the end-cutting-edge distal end increases; therefore, loss of the end cutting edges 1 is prevented to the greatest extent possible, and an exceptionally durable radius end mill is achieved.

Additionally, the present example exhibits a particularly exceptional effect on comparatively soft workpiece materials (having a Rockwell hardness of 50 HRC or lower), as indicated in experiments 2 and 3, which shall be described later. Therefore, the present example is used in machining of soft workpiece materials that readily produce built-up edges and undergo plastic deformation. As a result, a polishing action is exhibited that is sufficient even for deep scratches formed by overcutting occurring due to built-up edges, marring is removed, and the machined surface (cut surface) can be finished to an excellent glossy surface.

Experiments (evaluations) substantiating the aforementioned effects of the present example are described below.

<Experiment 1>

Experiment 1 confirmed reasonable conditions (ranges) for the inclination angle $\alpha$ of the pressing sliding-contact surfaces 2, the dish angle $\beta$ of the end cutting edges 1, and the projection amount A of the protruding region parts 5 in the present example.

Specifically, an evaluation was conducted in regard to the degree of glossiness of machined surfaces with respect to that yielded by a prior-art article (a typical prior-art end mill that does not have pressing sliding-contact surfaces 2) when evaluation samples in experiment nos. 1-15 shown in table 1 were created and a workpiece material was machined under the machining conditions indicated below. The quality of the glossiness with respect to that yielded by the prior-art article was visually confirmed. Assessment categories for the evaluation consisted of: ◎, which was assigned in cases where the machined surfaces had glossiness superior to that yielded by the prior-art article and where substantially no marring was observed; ○, which was assigned in cases where the machined surfaces had glossiness equivalent to or superior to that yielded by the prior-art article but some marring was observed; △, which was assigned in cases where the machined surfaces were equivalent to that yielded by the prior-art article; and ×, which was assigned in cases where cloudiness was observed in the machined surfaces and the machined surfaces were inferior to that yielded by the prior-art article.

Table 1

| Experiment no. | Inclination angle $\alpha$ of pressing sliding-contact surfaces (°) | Dish angle $\beta$ of end cutting edges (°) | Projection amount A of protruding region parts (mm) | Glossiness | Remarks |
|---|---|---|---|---|---|
| 1 | - | 3 | - | △ | Comparative example |
| 2 | 2 | 0.2 | 0.001 | ◎ | Present example |
| 3 | 2 | 0.2 | 0.003 | ◎ | Present example |
| 4 | 2 | 0.2 | 0.004 | ○ | Present example |
| 5 | 2 | 0.2 | 0.005 | × | Comparative example |
| 6 | 4 | 0.2 | 0.001 | ○ | Present example |
| 7 | 4 | 0.2 | 0.003 | ○ | Present example |
| 8 | 4 | 0.2 | 0.005 | × | Comparative example |
| 9 | 2 | 0.5 | 0.001 | ◎ | Present example |
| 10 | 2 | 1 | 0.001 | ○ | Present example |
| 11 | 2 | 1.5 | 0.001 | △ | Comparative example |
| 12 | 0.5 | 0.2 | 0.001 | ○ | Present example |
| 13 | 1 | 0.2 | 0.001 | ◎ | Present example |
| 14 | 3 | 0.2 | 0.003 | ◎ | Present example |
| 15 | 5 | 0.2 | 0.003 | △ | Comparative example |

[Machining conditions]

Tool outside diameter: 6 mm; radiused corner: 1 mm; shank diameter: 6 mm

Workpiece material: Prehardened steel (30 HRC)

Rotation speed: 5,250 rpm

Feeding speed: 1,600 mm/min

Axial-direction cut-in amount: 0.03 mm

Radial-direction cut-in amount: 0.15 mm

Coolant: Water-soluble cutting oil

As indicated in table 1, it was confirmed from the results of experiment nos. 2, 3, 6, 7, and 12-15 that the inclination angle $\alpha$ of the pressing sliding-contact surfaces 2 is desirably greater than 0° but not greater than 4°, preferably 0.5-4°, and more preferably 1-3°.
It was also confirmed from the results of experiment nos. 2, 9, 10, and 11 that the dish angle $\beta$ of the end cutting edges 1 is desirably 1° or less, and is preferably 0.5° or less.

It was also confirmed from the results of experiment nos. 2-8 that the projection amount A of the protruding region parts 5 is desirably 0.004 mm or less, and is preferably 0.001-0.003 mm.

<Experiment 2>

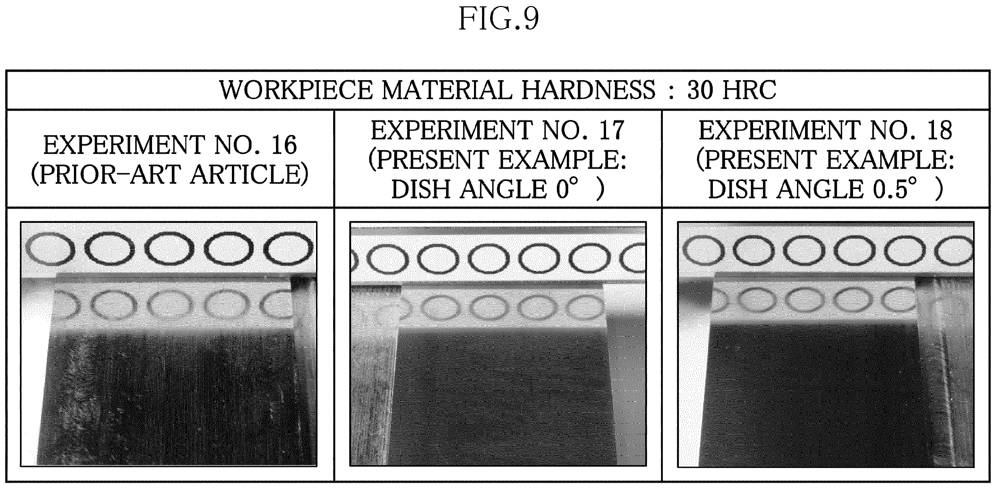

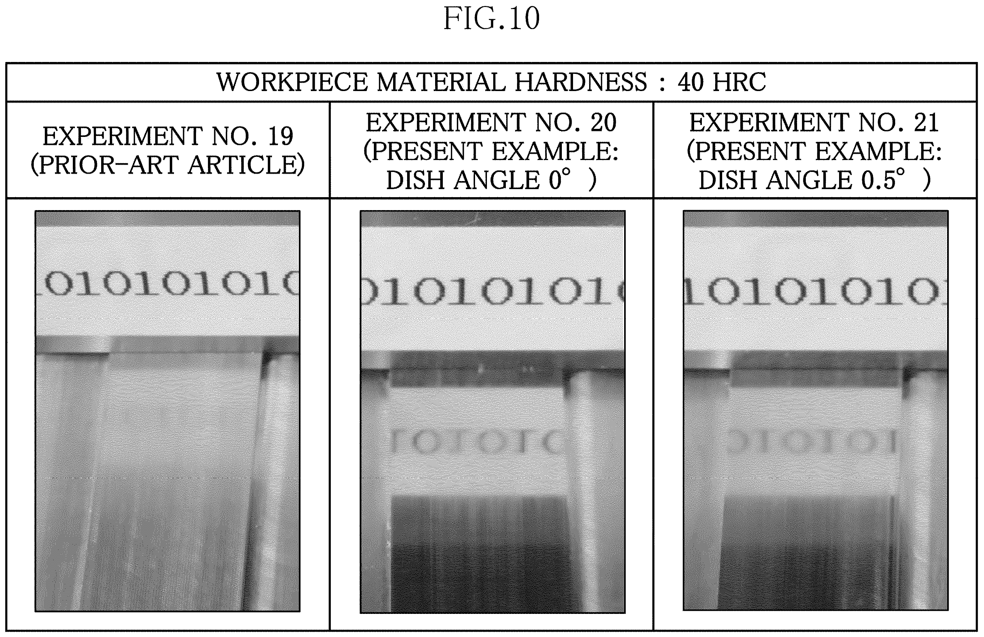

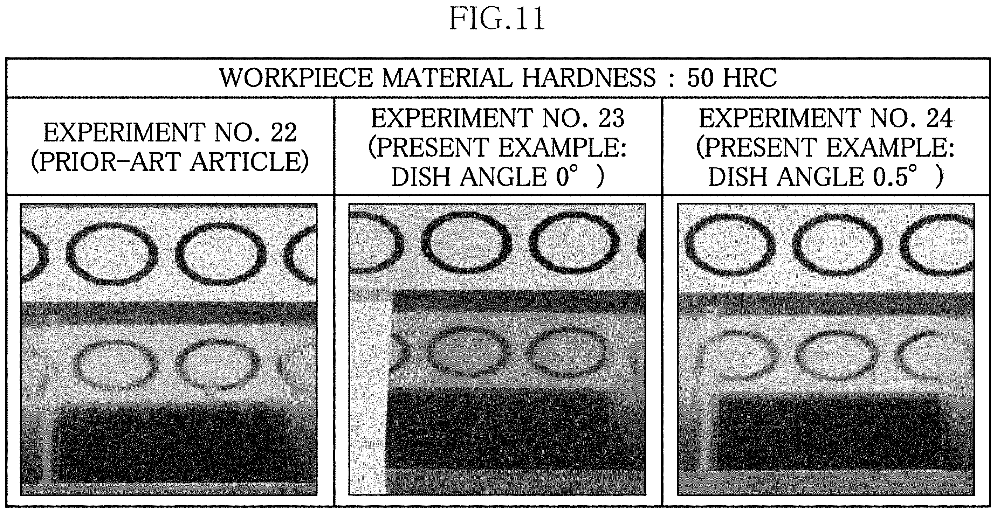

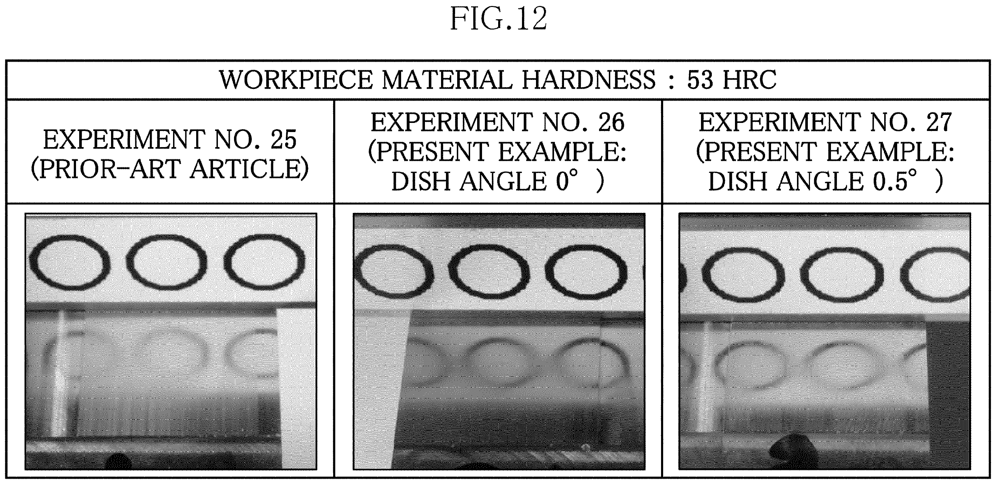

Experiment 2 confirmed the action and effect of the present example for cases where workpiece materials of different hardnesses were machined.
Specifically, various workpiece materials having a Rockwell hardness of 30-53 HRC were machined under the machining conditions indicated below using two variants; i.e., a prior-art article and the present example (specifically: one end mill for which the inclination angle $\alpha$ of the pressing sliding-contact surfaces 2 is 2°, the projection amount A of the protruding region parts 5 is 0.001 mm, and the dish angle $\beta$ of the end cutting edges 1 is 0°; and one end mill for which the inclination angle $\alpha$ of the pressing sliding-contact surfaces 2 is 2°, the projection amount A of the protruding region parts 5 is 0.001 mm, and the dish angle $\beta$ of the end cutting edges 1 is 0.5°), and the glossiness of the machined surfaces was evaluated. The glossiness was visually confirmed. Additionally, using reflection confirmation members on which a plurality of distinct "○" marks or "01" marks were repeatedly disposed, the surfaces where the "○" marks or the "01" marks were repeatedly disposed were held above the machined surfaces of the workpiece materials, as shown in FIGS. 9-12, and the appearance of (reflected images of) the "○" marks or the "01" marks appearing on the machined surfaces was confirmed and expressed as a "reflection." Assessment categories for the evaluation consisted of: ◎, which was assigned in cases where the machined surfaces were glossy and exhibited an excellent reflection; ○, which was assigned in cases where muddiness or marring was observed but a reflection was still apparent; and ×, which was assigned in cases where marring was prominent and substantially no reflection was apparent.

[Machining conditions]

Tool outside diameter: 3 mm; radiused corner: 0.2 mm; shank diameter: 6 mm
Workpiece material: Prehardened steel, tempered steel (30-53 HRC)
Rotation speed: 10,500 rpm
Feeding speed: 1,600 mm/min
Axial-direction cut-in amount: 0.03 mm
Radial-direction cut-in amount: 0.15 mm
Coolant: Water-soluble cutting oil

The evaluation results for experiment 2 are shown in table 2. FIGS. 9-12 show results of comparing the states (glossiness) of the machined surfaces in experiment 2.

Table 2

| Experiment No. | Workpiece material hardness | Inclination angle $\alpha$ of pressing sliding-contact surfaces (°) | Dish angle $\beta$ of end cutting edges (°) | Projection amount A of protruding region parts (mm) | Glossiness | Remarks |
|---|---|---|---|---|---|---|
| 16 | Prehardened steel 30 HRC | -- | 3 | -- | × | Prior-art article |
| 17 | Prehardened steel 30 HRC | 2 | 0 | 0.001 | ◎ | Present example |
| 18 | Prehardened steel 30 HRC | 2 | 0.5 | 0.001 | ◎ | Present example |
| 19 | Prehardened steel 40 HRC | -- | 3 | -- | × | Prior-art article |
| 20 | Prehardened steel 40 HRC | 2 | 0 | 0.001 | ◎ | Present example |
| 21 | Prehardened steel 40 HRC | 2 | 0.5 | 0.001 | ◎ | Present example |

(continued)

| Experiment No. | Workpiece material | | Inclination angle $\alpha$ of pressing sliding-contact surfaces (°) | Dish angle $\beta$ of end cutting edges (°) | Projection amount A of protruding region parts (mm) | Glossiness | Remarks |
|---|---|---|---|---|---|---|---|
| | hardness | | | | | | |
| 22 | Tempered steel | | -- | 3 | -- | ○ | **Prior-art** article |
| | 50 HRC | | | | | | |
| 23 | Tempered steel | | 2 | 0 | 0.001 | ◎ | Present example |
| | 50 HRC | | | | | | |
| 24 | Tempered steel | | 2 | 0.5 | 0.001 | ◎ | Present example |
| | 50 HRC | | | | | | |
| 25 | Tempered steel | | -- | 3 | -- | ○ | Prior-art article |
| | 53 HRC | | | | | | |
| 26 | Tempered steel | | 2 | 0 | 0.001 | ○ | Present example |
| | 53 HRC | | | | | | |
| 27 | Tempered steel | | 2 | 0.5 | 0.001 | ○ | Present example |
| | 53 HRC | | | | | | |

As indicated in table 2 and as shown in FIGS. 9-12, whereas the prior-art article yielded, for all workpiece materials, results in which marring was prominent and substantially no reflection was apparent, or in which the machined surfaces were muddy or marring was observed and no glossiness was exhibited despite a reflection being apparent, in the present example excellent reflection and exceptional glossiness were obtained for workpiece materials having a hardness (Rockwell hardness) of 30-50 HRC at dish angles $\beta$ of both 0° and 0.5°.

It was confirmed from the results of experiment 2 that with the present example, in machining of soft workpiece materials that readily produce built-up edges, a polishing action is exhibited that is sufficient even for deep scratches formed by overcutting occurring due to built-up edges, marring is removed, and the machined surface (cut surface) can be finished to an excellent glossy surface.

<Experiment 3>

Experiment 3 confirmed the action and effect of the present example for cases where workpiece materials even softer than those used in experiment 2 were machined.

Specifically, workpiece materials were machined under the machining conditions indicated below using a prior-art article and the present example (end mill for which the inclination angle $\alpha$ of the pressing sliding-contact surfaces 2 is 2°, the projection amount A of the protruding region parts 5 is 0.001 mm, and the dish angle $\beta$ of the end cutting edges 1 is 0°), and the machined surfaces were observed using a laser microscope.

[Machining conditions]

Tool outside diameter: 3 mm; radiused corner: 0.2 mm; shank diameter: 6 mm
Workpiece material: Carbon steel S50C (Brinell hardness: about 150 HBW)
Rotation speed: 10,500 rpm
Feeding speed: 1,600 mm/min
Axial-direction cut-in amount: 0.03 mm
Radial-direction cut-in amount: 0.15 mm
Coolant: Water-soluble cutting oil

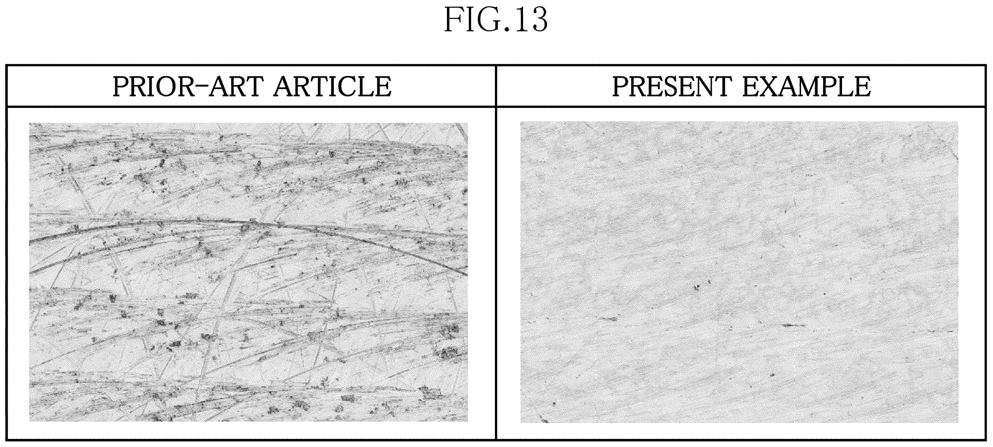

FIG. 13 shows the results of observation of the state of a machined surface performed using the laser microscope in experiment 3.

As shown in FIG. 13, whereas in the prior-art example numerous scratches were observed on the machined surface, in the present example substantially no scratches were observed on the machined surface.

It was confirmed from the results of experiment 3 that with the present example, even in machining of pre-heat-treatment steel materials that are even softer than prehardened steel, a polishing action is exhibited that is sufficient even for deep scratches formed by overcutting occurring due to built-up edges, marring is removed, and the machined surface (cut surface) can be finished to an excellent glossy surface.

<Experiment 4>

Experiment 4 confirmed the dish angle β of the end cutting edges 1, including cases where the dish angle β was less than 0°.

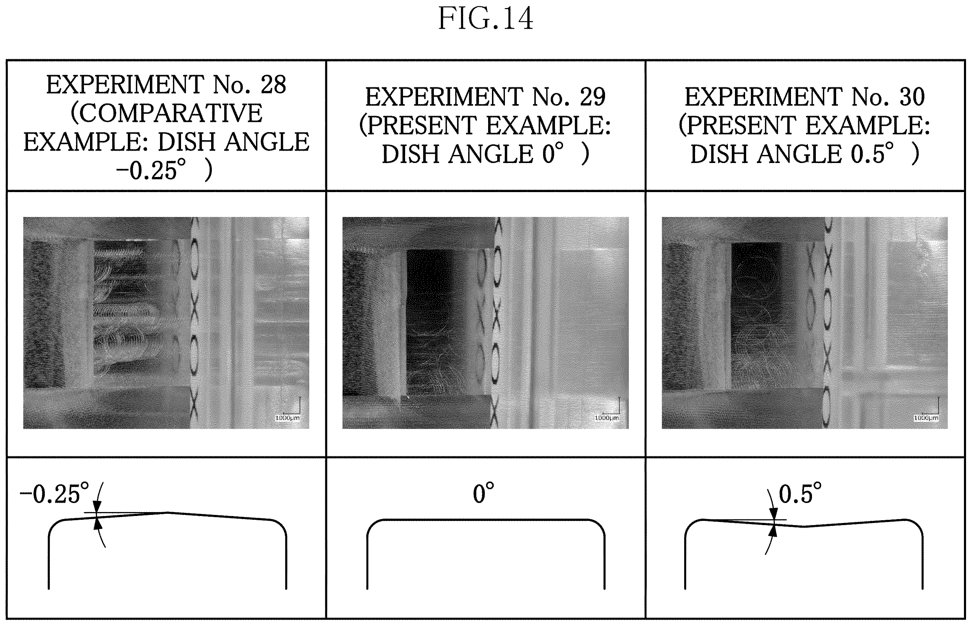

Specifically, an evaluation was conducted in regard to the glossiness of machined surfaces when evaluation samples (experiment nos. 28-30) were created by setting the inclination angle α of the pressing sliding-contact surfaces 2 to 2° and setting the dish angle β to -0.25° (comparative example), 0° (present example), or 0.5° (present example) and the workpiece materials were machined under the machining conditions described below. The glossiness was visually confirmed. Additionally, using reflection confirmation members on which a plurality of distinct "○×" marks were repeatedly disposed, the surfaces where the "○×" marks were repeatedly disposed were held above the machined surfaces of the workpiece material, as shown in FIG. 14, and the appearance of (reflected images of) the "○×" marks appearing on the machined surfaces was confirmed and expressed as a "reflection." In the same manner as with experiment 2, assessment categories for the evaluation consisted of: ◎, which was assigned in cases where the machined surfaces were glossy and exhibited an excellent reflection; ○, which was assigned in cases where muddiness or marring was observed but a reflection was still apparent; and ×, which was assigned in cases where marring was prominent and substantially no reflection was apparent.

[Machining conditions]

Tool outside diameter: 3 mm; radiused corner: 0.2 mm; shank diameter: 6 mm
Workpiece material: Carbon steel S50C (Brinell hardness: about 150 HBW)
Rotation speed: 10,500 rpm
Feeding speed: 1,600 mm/min
Axial-direction cut-in amount: 0.03 mm
Radial-direction cut-in amount: 0.15 mm
Coolant: Water-soluble cutting oil

The evaluation results for experiment 4 are shown in table 3. FIG. 14 shows results of comparing the state (glossiness) of each of the machined surfaces in experiment 4.

Table 3

| Experiment No. | Inclination angle α of pressing sliding-contact surfaces (°) | Dish angle β of end cutting edges (°) | Projection amount A of protruding region parts (mm) | Glossiness | Remarks |
|---|---|---|---|---|---|
| 28 | 2 | -0.25 | 0.001 | × | Comparative example |
| 29 | 2 | 0 | 0.001 | ◎ | Present example |
| 30 | 2 | 0.5 | 0.001 | ◎ | Present example |

As indicated in table 3 and as shown in FIG. 14, in the cases where the dish angle β was 0° (experiment no. 29) or 0.5° (experiment no. 30), the machined surface was glossy and exhibited an excellent reflection. However, in the case where the dish angle β was -0.25° (experiment no. 28), the machined surface was roughened, marring was prominent, and substantially no reflection was apparent.

These results were presumably due to a ceasing of the action by which the pressing sliding-contact surfaces 2 and the ridges 4 (i.e., the protruding region parts 5) scraped the cut surface cut by the bottom cutting edges 1 smooth while plastically deforming the cut surface, because the furthest distal end of the tool will be near the tool rotation axis C if the dish angle β is less than 0°.

The present invention is not limited to the present example, and the specific configurations of each constituent element can be designed as appropriate.

**Claims**

1. An end mill having linear end cutting edges on a tool distal end, the end mill being **characterized in that**: a pressing sliding-contact surface is continuous with the side of each end cutting edge oriented rearward in the direction of tool rotation, and, in a pressed state, makes sliding contact with a cut surface cut by the cutting edges; the pressing sliding-contact surfaces are configured as inclined flat surfaces that are inclined upward at a prescribed inclination angle from the end-cutting-edge side toward the side oriented rearward in the direction of tool rotation in a state in which the tool distal end is oriented upward; and the inclination angle is set greater than 0° but not greater than 4° with respect to a surface orthogonal to a tool rotation axis.

2. The end mill according to claim 1, wherein the end mill is **characterized in that**: a flank surface is continuous with the side of each pressing sliding-contact surface oriented rearward in the direction of tool rotation; and the pressing sliding-contact surfaces and ridges formed at boundaries between the pressing sliding-contact surfaces and the flank surfaces are configured to make sliding contact with the cut surface in a state of pressing against the cut surface.

3. The end mill according to claim 2, wherein the end mill is **characterized in that**: the end mill has protruding region parts, each of which includes one of the pressing sliding-contact surfaces, one of the flank surfaces, and one of the ridges, the protruding region parts projecting in the direction of the tool distal end away from the end cutting edges; and the projection amount of the protruding region parts with respect to the end cutting edges is configured to be greater than 0 mm but not greater than 0.004 mm.

4. The end mill according to any one of claims 1 to 3, wherein the end mill is **characterized in that** the pressing sliding-contact surfaces have a length of at least 1% of the tool outside diameter and are provided from an outer-circumferential-side base point of each end cutting edge toward the tool-rotation-axis side.

5. The end mill according to any one of claims 1 to 4, wherein the end mill is **characterized in that** the dish angle of the end cutting edges is 0-1°.

6. The end mill according to any one of claims 1 to 5, wherein the end mill is **characterized in that** the pressing sliding-contact surfaces are formed in the shape of elongated forms and are provided from an outer-circumferential-side base point of each end cutting edge to the vicinity of the tool rotation axis.

7. The end mill according to any one of claims 1 to 6, wherein the end mill is **characterized by** being configured as a radius end mill in which a radiused corner edge is formed so as to be continuous with the outer-circumferential side of each end cutting edge, and, furthermore, an outer-circumferential edge is formed so as to be continuous with each radiused corner edge.

FIG.1

FIG.2

EP 4 699 724 A1

FIG.3

EP 4 699 724 A1

FIG.4

FIG.5

# FIG.6

EP 4 699 724 A1

FIG.7

EP 4 699 724 A1

( a )

BUILT-UP EDGE

WORKPIECE
MATERIAL

3

1    2   4       5

( b )

## FIG.8

( a )

BUILT-UP EDGE

OVERCUTTING

WORKPIECE
MATERIAL

( b )

EP 4 699 724 A1

## FIG.9

| WORKPIECE MATERIAL HARDNESS : 30 HRC | | |
|---|---|---|
| EXPERIMENT NO. 16 (PRIOR-ART ARTICLE) | EXPERIMENT NO. 17 (PRESENT EXAMPLE: DISH ANGLE 0° ) | EXPERIMENT NO. 18 (PRESENT EXAMPLE: DISH ANGLE 0.5° ) |
| | | |

EP 4 699 724 A1

## FIG.10

| WORKPIECE MATERIAL HARDNESS : 40 HRC | | |
|---|---|---|
| EXPERIMENT NO. 19 (PRIOR-ART ARTICLE) | EXPERIMENT NO. 20 (PRESENT EXAMPLE: DISH ANGLE 0° ) | EXPERIMENT NO. 21 (PRESENT EXAMPLE: DISH ANGLE 0.5° ) |
| | | |

EP 4 699 724 A1

## FIG.11

| WORKPIECE MATERIAL HARDNESS : 50 HRC | | |
|---|---|---|
| EXPERIMENT NO. 22 (PRIOR-ART ARTICLE) | EXPERIMENT NO. 23 (PRESENT EXAMPLE: DISH ANGLE 0° ) | EXPERIMENT NO. 24 (PRESENT EXAMPLE: DISH ANGLE 0.5° ) |
| | | |

EP 4 699 724 A1

## FIG.12

| WORKPIECE MATERIAL HARDNESS : 53 HRC | | |
|---|---|---|
| EXPERIMENT NO. 25<br>(PRIOR-ART ARTICLE) | EXPERIMENT NO. 26<br>(PRESENT EXAMPLE:<br>DISH ANGLE 0° ) | EXPERIMENT NO. 27<br>(PRESENT EXAMPLE:<br>DISH ANGLE 0.5° ) |
| | | |

EP 4 699 724 A1

FIG.13

PRESENT EXAMPLE

PRIOR-ART ARTICLE

# FIG.14

| EXPERIMENT No. 28 (COMPARATIVE EXAMPLE: DISH ANGLE −0.25° ) | EXPERIMENT No. 29 (PRESENT EXAMPLE: DISH ANGLE 0° ) | EXPERIMENT No. 30 (PRESENT EXAMPLE: DISH ANGLE 0.5° ) |
|---|---|---|
| | | |
| −0.25° | 0° | 0.5° |

EP 4 699 724 A1

## EUROPEAN SEARCH REPORT

Application Number

EP 25 18 8064

### DOCUMENTS CONSIDERED TO BE RELEVANT

| Category | Citation of document with indication, where appropriate, of relevant passages | Relevant to claim |
|---|---|---|
| A | JP 2016 016468 A (UNION TOOL KK) 1 February 2016 (2016-02-01) * paragraphs [0004], [0005], [0019], [0020]; figures 1-3 * * paragraph [0048] - paragraph [0051] * ----- | 1-7 |
| A | JP 7 510647 B2 (DENSO CORP; NAGOYA INST TECH) 4 July 2024 (2024-07-04) * paragraphs [0026], [0033], [0034]; figures 1-4 * ----- | 1 |
| A | US 2015/174672 A1 (BABA MAKOTO [JP] ET AL) 25 June 2015 (2015-06-25) * the whole document * ----- | 1-7 |

**CLASSIFICATION OF THE APPLICATION (IPC)**

INV.
B23C5/10

**TECHNICAL FIELDS SEARCHED (IPC)**

B23C
B23B

The present search report has been drawn up for all claims

| Place of search | Date of completion of the search | Examiner |
|---|---|---|
| The Hague | 23 December 2025 | Prelovac, Jovanka |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

         .................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 18 8064

This annex lists the patent family members relating to the patent documents cited in the above-mentioned European search report.
The members are as contained in the European Patent Office EDP file on
The European Patent Office is in no way liable for these particulars which are merely given for the purpose of information.

23-12-2025

| Patent document cited in search report | | | Publication date | Patent family member(s) | | | Publication date |
|---|---|---|---|---|---|---|---|
| JP 2016016468 | A | | 01-02-2016 | CN | 105290483 | A | 03-02-2016 |
| | | | | EP | 2965846 | A1 | 13-01-2016 |
| | | | | JP | 5925250 | B2 | 25-05-2016 |
| | | | | JP | 2016016468 | A | 01-02-2016 |
| | | | | KR | 20160005651 | A | 15-01-2016 |
| | | | | TW | 201615311 | A | 01-05-2016 |
| | | | | US | 2016001382 | A1 | 07-01-2016 |
| JP 7510647 | B2 | | 04-07-2024 | CN | 114951768 | A | 30-08-2022 |
| | | | | DE | 102022104036 | A1 | 25-08-2022 |
| | | | | JP | 7510647 | B2 | 04-07-2024 |
| | | | | JP | 2022129078 | A | 05-09-2022 |
| US 2015174672 | A1 | | 25-06-2015 | CN | 104640658 | A | 20-05-2015 |
| | | | | EP | 2878404 | A1 | 03-06-2015 |
| | | | | JP | 6139528 | B2 | 31-05-2017 |
| | | | | JP | WO2014017576 | A1 | 11-07-2016 |
| | | | | KR | 20150040866 | A | 15-04-2015 |
| | | | | US | 2015174672 | A1 | 25-06-2015 |
| | | | | WO | 2014017576 | A1 | 30-01-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016016468 A